# EUROPÄISCHE PATENTSCHRIFT

(11) **EP 3 673 289 B1**
(45) Veröffentlichungstag und Bekanntmachung des Hinweises auf die Patenterteilung: **11.10.2023**
(21) Anmeldenummer: 18750193.7
(22) Anmeldetag: 03.08.2018
(51) Int. Cl.: G01S 7/481, G01S 17/93

(54) **OPTISCHE ANORDNUNG FÜR EIN LIDAR-SYSTEM, LIDAR-SYSTEM UND ARBEITSVORRICHTUNG**
OPTICAL ARRANGEMENT FOR A LIDAR SYSTEM, LIDAR SYSTEM, AND WORKING DEVICE
ENSEMBLE OPTIQUE POUR SYSTÈME LIDAR, SYSTÈME LIDAR ET DISPOSITIF DE TRAVAIL

(30) Priorität: 23.08.2017 DE 102017214705
(43) Veröffentlichungstag der Anmeldung: 01.07.2020
(73) Patentinhaber: Robert Bosch GmbH, 70442 Stuttgart (DE)
(72) Erfinder: BOGATSCHER, Siegwart, 71229 Leonberg (DE); SPARBERT, Jan, 71277 Rutesheim (DE); HOLLECZEK, Annemarie, 4701-970 Braga (PT); PETERSEIM, Tobias, 71032 Boeblingen (DE); SPIESSBERGER, Stefan, 71384 Weinstadt (DE)
(86) Internationale Anmeldenummer: PCT/EP2018/071124
(87) Internationale Veröffentlichungsnummer: WO 2019/038062

(56) Entgegenhaltungen:
- US-A1- 2008 316 463
- US-A1- 2015 055 117

## Beschreibung

### Stand der Technik

Die vorliegende Erfindung betrifft eine optische Anordnung für ein LiDAR-System, ein LiDAR-System als solches sowie eine Arbeitsvorrichtung und insbesondere ein Fahrzeug.

Beim Einsatz von Arbeitsvorrichtungen, von Fahrzeugen und anderen Maschinen und Anlagen werden vermehrt Betriebsassistenzsysteme oder Sensoranordnungen zur Erfassung der Betriebsumgebung eingesetzt. Neben radarbasierten Systemen oder Systemen auf der Grundlage von Ultraschall kommen vermehrt auch lichtbasierte Erfassungssysteme zum Einsatz, z.B. so genannte LiDAR-Systeme (englisch: LiDAR : light detection and ranging).

Bei bekannten LiDAR-Systemen und deren optischen Anordnungen besteht ein Nachteil dahingehend, dass bei koaxialen Strahlengängen der Senderoptik und der Empfängeroptik auf der Strahlausgangsseite bzw. der Strahleingangsseite herkömmlicherweise Strahlteiler verwendet werden, die bei Linienbeleuchtung zu einem vergrößerten Bauraum des LiDAR-Systems zu einer reduzierten Empfangsapertur und/oder zu einer Verminderung im Strahldurchmesser beim Strahlaustritt führen. Die Dokumente US 2015/055117 und US 2008/316463 sind Stand der Technik.

### Offenbarung der Erfindung

Die erfindungsgemäße optische Anordnung für ein LiDAR-System mit den Merkmalen des Anspruchs 1 weist demgegenüber den Vorteil auf, dass bei Linienbeleuchtung ohne Bauraumvergrößerung ein Linienbeleuchtungsstrahl ohne Reduktion in der Empfangsapertur bei großem Strahldurchmesser am Strahlaustritt des LiDAR-Systems ausgesandt werden kann. Dies wird erfindungsgemäß mit den Merkmalen des Anspruchs 1 dadurch erreicht, dass eine optische Anordnung für ein LiDAR-System geschaffen wird, welche ausgebildet ist (i) mit einer Empfängeroptik und einer Senderoptik, welche teilweise koaxiale Strahlengänge aufweisen, (ii) mit einer Linienlichtquelle mit einer Linienorientierung, wobei die Linienorientierung insbesondere in einem Sichtfeld des zu Grunde liegenden LiDAR-Systems ausgebildet ist, und (iii) mit einer Umlenkeinheit als Strahlteilereinheit in einem Übergangsbereich von einem gemeinsamen koaxialen Bereich - insbesondere auf einer Strahlaustrittsseite der Senderoptik bzw. auf einer Strahleintrittsseite der Empfängeroptik - zu einem getrennten biaxialen Bereich der Strahlengänge der Empfängeroptik und der Senderoptik - insbesondere auf einer Detektorseite bzw. auf einer Quellenseite - zur biaxialen Abzweigung eines detektorseitigen Bereichs des Strahlengangs der Empfängeroptik.

Dabei weist die Umlenkeinheit erfindungsgemäß einen Lochspiegel mit einem Langloch mit einer größeren Erstreckung in einer Längserstreckungsrichtung und mit einer geringeren Erstreckung in einer Quererstreckungsrichtung auf, insbesondere zur Durchführung von Primärlicht aus der Linienlichtquelle. Ferner ist die Längserstreckungsrichtung des Langlochs erfindungsgemäß senkrecht ausgerichtet zur Linienorientierung der zu Grunde liegenden Linienlichtquelle.

Im Zusammenhang mit der vorliegenden Erfindung kann die Umlenkeinheit jeweils synonym auch als Ablenkeinheit, als Strahlteilereinheit oder als Strahlteiler bezeichnet werden.

Im Zusammenhang mit der vorliegenden Erfindung bildet sich die so genannte Laserlinie vorzugsweise erst in einiger Entfernung von der Lichtquelleneinheit und nach Durchlaufen des Bereichs mit der Umlenkeinheit in der gewünschten Qualität aus, nämlich mit der von der Lichtquelleneinheit vorgegebenen und von der Umlenkeinheit weiter umgesetzten Linienorientierung.

Die Unteransprüche zeigen bevorzugte Weiterbildungen der Erfindung.

Bei einer bevorzugten Ausgestaltungsform der erfindungsgemäßen optischen Anordnung für ein LiDAR-System werden die Längserstreckung und die Quererstreckung der jeweiligen Umlenkeinheit in geeigneter Weise ins Verhältnis gesetzt zueinander und/oder zu den Aperturen und den weiteren geometrischen Eigenschaften der Senderoptik und der Empfängeroptik.

Dabei ist es insbesondere vorgesehen, dass das Verhältnis von Längserstreckung zu Querstreckung an der Umlenkeinheit mindestens den Wert 2:1, vorzugsweise mindestens den Wert 3:1 und weiter bevorzugt mindestens den Wert 4:1 aufweist.

Bei einer anderen zusätzlichen oder alternativen Ausgestaltungsform der erfindungsgemäßen optischen Anordnung für ein LiDAR-System, weisen ein Durchmesser der Apertur des Strahlengangs der Senderoptik oder die Längserstreckung an der Umlenkeinheit im Verhältnis der Apertur des Strahlengangs der Empfängeroptik einen Wert auf im Bereich von etwa 1:14 bis etwa 1:7.

Bei der Ausgestaltung der Umlenkeinheit und bei der Wahl der entsprechenden Geometrie des Langlochs bieten sich verschiedene und an die jeweilige Anwendung und die Geometrien von Empfängeroptik und Senderoptik angepasste geometrische Ausgestaltungen an.

So ist es gemäß einer bevorzugten Weiterbildung der erfindungsgemäßen optischen Anordnung für ein LiDAR-System vorgesehen, dass das Langloch der Umlenkeinheit in Draufsicht auf die Umlenkeinheit die Form eines Rechtecks, eine bikonvex elliptische Form, eine bikonkave Form oder eine Doppelmeniskusform aufweist.

Bei einer anderen vorteilhaften Ausgestaltungsform der erfindungsgemäßen optischen Anordnung für ein LiDAR-System sind die Senderoptik und die Empfängeroptik mit zumindest teilweise oder abschnittsweise zueinander koaxialen Strahlengängen auf der Strahlaustrittsseite der Senderoptik und/oder Strahleintrittsseite der Empfängeroptik ausgebildet.

Dabei ist es von besonderem Vorteil, wenn die Umlenkeinheit zumindest teilweise oder abschnittsweise biaxiale Strahlengänge auf der Seite der Lichtquelleneinheit der Senderoptik und auf der Seite einer Detektoranordnung der Empfängeroptik bildet.

Zur Erzielung eines besonders kompakten Aufbaus der erfindungsgemäßen optischen Anordnung ist es gemäß einer anderen vorteilhaften Ausgestaltungsform vorgesehen, dass die Empfängeroptik einen mehrfach gefalteten Strahlengang aufweist, insbesondere mit zwei oder drei Fangspiegeln, mit einem eingangsseitig ersten Fangspiegel, welcher Teil der Umlenkeinheit ist oder die Umlenkeinheit bildet, mit einem oder mit mehreren Fangspiegeln als konkaven Spiegeln und/oder mit einem der Fangspiegel nach Art eines reflektierenden Bandpassfilters, insbesondere in planarer Form.

Ferner betrifft die vorliegende Erfindung ein LiDAR-System zur optischen Erfassung eines Sichtfeldes, insbesondere für eine Arbeitsvorrichtung und/oder ein Fahrzeug. Das LiDAR-System ist mit einer erfindungsgemäßen optischen Anordnung ausgebildet.

Des Weiteren betrifft die vorliegende Erfindung eine Arbeitsvorrichtung und insbesondere ein Fahrzeug, welche mit einem erfindungsgemäßen LiDAR-System und zur optischen Erfassung eines Sichtfeldes ausgebildet sind.

### Kurzbeschreibung der Figuren

Unter Bezugnahme auf die beigefügten Figuren werden Ausführungsformen der Erfindung im Detail beschrieben.
- Figur 1: ist ein Blockdiagramm, welches schematisch eine Ausführungsform der erfindungsgemäßen optischen Anordnung im Zusammenhang mit einer Ausführungsform eines erfindungsgemäßen LiDAR-Systems zeigt.
- Figuren 2 bis 4: zeigen schematische und teilweise geschnittene Seitenansichten einer Ausführungsform der erfindungsgemäßen optischen Anordnung für ein erfindungsgemäß ausgestaltetes LiDAR-System mit einer Umlenkeinheit mit Lochspiegel mit Langloch.
- Figuren 5 bis 7: zeigen schematische Draufsichten auf Umlenkeinheiten, die bei Ausführungsformen der erfindungsgemäßen optischen Anordnung für ein LiDAR-System verwendet werden können.
- Figuren 8 bis 10: zeigen schematische und teilweise geschnittene Seitenansichten zu erfindungsgemäß ausgestalteten LiDAR-Systemen mit gefalteter Empfängeroptik.

### Bevorzugte Ausführungsformen der Erfindung

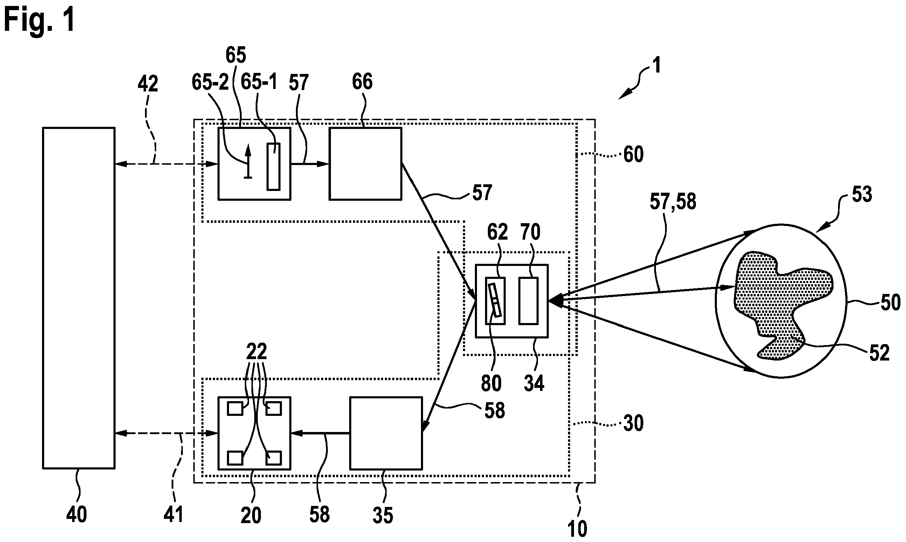

Nachfolgend werden unter Bezugnahme auf die Figuren 1 bis 10 Ausführungsbeispiele und der technische Hintergrund der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Figur 1 zeigt in Form eines schematischen Blockdiagramms eine Ausführungsform des erfindungsgemäßen LiDAR-Systems 1 unter Verwendung einer Ausführungsform der erfindungsgemäßen optischen Anordnung 10.

Das LiDAR-System 1 gemäß Figur 1 weist eine Senderoptik 60 auf, welche von einer Lichtquelleneinheit 65, z.B. mit einem Laser als Linienlichtquelle 65-1 mit Linienorientierung 65-2, gespeist wird und Primärlicht 57 erzeugt und dieses - ggf. nach Durchlaufen einer Strahlformungsoptik 66 - in ein Sichtfeld 50 zur Erfassung und/oder Untersuchung einer Szene 53 und eines dort befindlichen Objekts 52 aussendet.

Des Weiteren weist das LiDAR-System 1 gemäß Figur 1 eine Empfängeroptik 30 auf, welche Licht und insbesondere vom Objekt 52 im Sichtfeld 50 reflektiertes Licht als Sekundärlicht 58 über ein Objektiv 34 als Primäroptik empfängt und über eine Detektoroptik 35 Sekundäroptik an eine Detektoranordnung 20 mit Detektor- oder Sensorelementen 22 überträgt.

Die Steuerung der Lichtquelleneinheit 65 sowie der Detektoranordnung 20 erfolgt über Steuerleitungen 42 bzw. 41 mittels einer Steuer- und Auswerteeinheit 40.

Die gemeinsame sichtfeldseitige Ablenkoptik 62 kann als Teil einer Primäroptik 34 der Empfängeroptik 30 aufgefasst werden und weist die erfindungsgemäße Ausgestaltung der optischen Anordnung 10 mit einer entsprechenden Umlenkeinheit 80 auf, die in Figur 1 rein schematisch dargestellt ist.

Optional und vorteilhaft ist das sichtfeldseitige Vorsehen einer Aperturoptik 70 zum geeigneten Ausgeben des Primärlichts 57 und zum bündelnden Empfangen des Sekundärlichts 58.

Die Detektoranordnung 20 kann mit einem oder mehreren Sensorelementen 22 ausgebildet sein, welche auch entsprechend der Linienorientierung 65-2 der Linienlichtquelle 65-1 nach Art eines Liniendetektors angeordnet sein können.

Die optische Anordnung 10 ist ausgebildet für ein LiDAR-System 1 zur optischen Erfassung eines Sichtfeldes 50, insbesondere für eine Arbeitsvorrichtung, ein Fahrzeug oder dergleichen, und ist ausgebildet mit einer Senderoptik 60 zum Aussenden eines Sendelichtsignals in das Sichtfeld 50, einer Detektoranordnung 20 und einer Empfängeroptik 30 zum optischen Abbilden des Sichtfeldes 50 auf die Detektoranordnung 20.

Die Empfängeroptik 30 und die Senderoptik 60 sind sichtfeldseitig mit im Wesentlichen koaxialen optischen Achsen ausgebildet und weisen eine gemeinsame Ablenkoptik 62 auf.

Die Empfängeroptik 30 weist detektorseitig eine Sekundäroptik 35 auf, welche ausgebildet ist und Mittel umfasst, über die Ablenkoptik 62 aus dem Sichtfeld 50 einfallendes Licht inhärent auf die Detektoranordnung 20 zu richten.

Bei der optischen Anordnung 10 ist die Senderoptik 60 allgemein ausgebildet und weist Mittel auf zum Aussenden von Primärlicht 57 in das Sichtfeld 50.

Ferner ist bei der optischen Anordnung 10 die Empfängeroptik 30 ausgebildet und weist Mittel auf zum optischen Abbilden des Sichtfeldes 50 auf die Detektoranordnung 20.

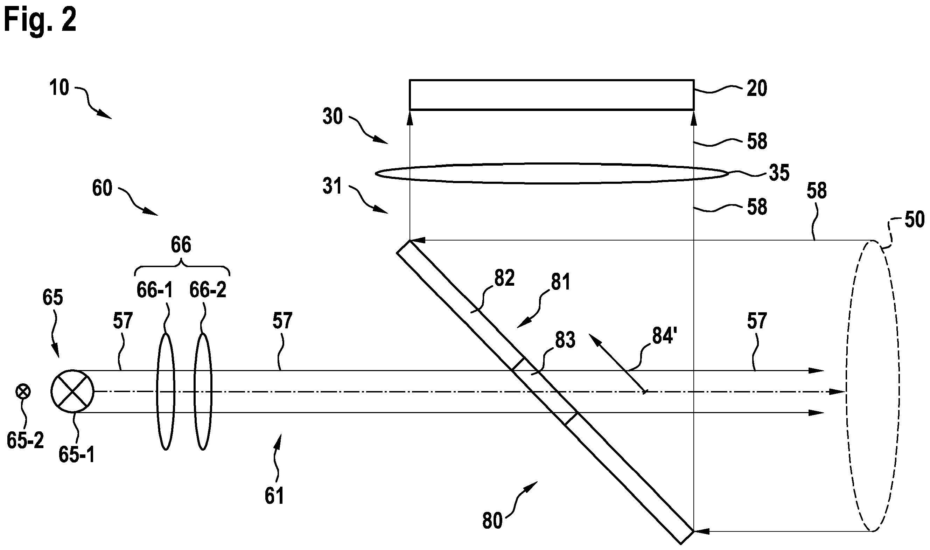

Figuren 2 bis 4 zeigen schematische und teilweise geschnittene Seitenansichten einer Ausführungsform der erfindungsgemäßen optischen Anordnung 10 für ein erfindungsgemäß ausgestaltetes LiDAR-System 1 mit einer Umlenkeinheit 80 mit Lochspiegel 81 mit Langloch 83.

Die Senderoptik 60 mit dem entsprechenden Strahlengang 61 umfasst eine Lichtquelleneinheit 65 mit einer Linienlichtquelle 65-1, zum Beispiel in Form eines Linienlasers mit einer Linienorientierung 65-2, die in der in Figur 2 dargestellten Anordnung zum Beispiel in die Zeichenebene hineinorientiert ist. Im Strahlengang 61 der Senderoptik 60 schließt sich eine Strahlformungsoptik 66 mit einer ersten Kollimatoroptik 66-1 und einer zweiten Kollimatoroptik 66-2 an.

Das im Betrieb durch die Linienlichtquelle 65-1 erzeugte und ausgesandte Primärlicht 57 wird in der in Figur 2 gezeigten optischen Anordnung 10 auf die Umlenkeinheit 80 mit einem Lochspiegel 81 mit Spiegelkörper 82 und Langloch 83 gerichtet, so dass das Primärlicht 57 durch das Langloch 83 fällt. Der Strahl des Primärlichts 57 durchläuft das Langloch 83, wird also von diesem transmittiert, wobei jedoch die Strahleigenschaften nicht verändert werden. Vorzugsweise ist das Primärlicht 57 entsprechend auf die Ebene des Langlochs 83 fokussiert. Dies ist in den Figuren rein schematisch dargestellt.

Nach dem Durchtritt des Primärlichts 57 durch die Umlenkeinheit 80 setzt das Primärlicht 57 seine Ausbreitung entlang der dann koaxialen Strahlengängen 31 und 61 für die Empfängeroptik 30 und die Senderoptik 60 fort und verlässt schließlich die optische Anordnung 10 in Richtung auf das hier nur schematisch dargestellte Sichtfeld 50.

Die Empfängeroptik 30 mit ihrem Strahlengang 31 empfängt Sekundärlicht 58 aus dem Sichtfeld 50 über die vergleichsweise große Fläche des Spiegelkörpers 82 des Lochspiegels 81 der Umlenkeinheit 80.

Die Umlenkeinheit 80 weist eine Neigung derart auf, dass der einer Detektoranordnung 20 zugeordnete und vom Sichtfeld 50 abgewandte Bereich des Strahlengangs 31 der Empfängeroptik 30 senkrecht orientiert ist zum Strahlengang 61 der Senderoptik 60 und zu dem dem Sichtfeld 50 zugewandten Bereich des Strahlengangs 31 der Empfängeroptik 30.

Mittels einer Sekundäroptik 35, die auch als Detektoroptik bezeichnet werden kann, wird das Sekundärlicht 58 auf die Detektoranordnung 20 projiziert und einem Nachweis zugeführt.

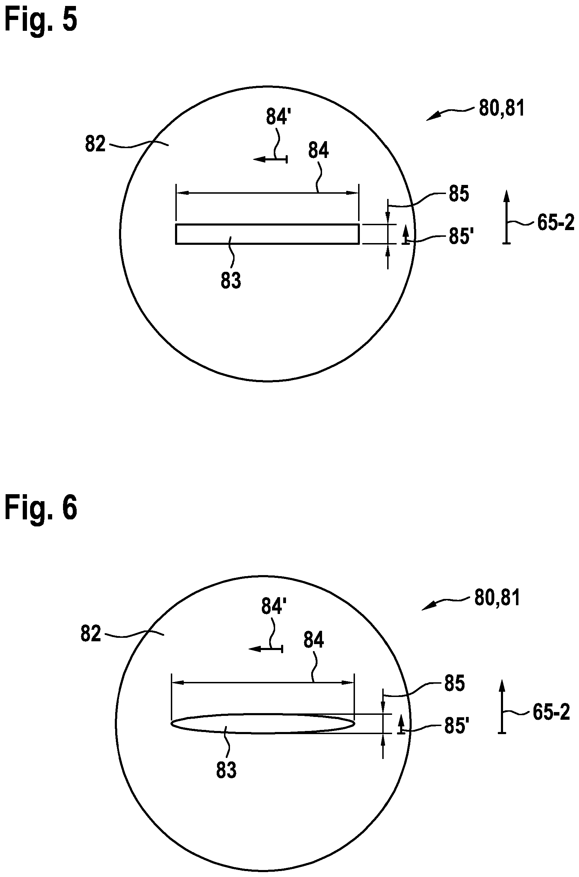

Figuren 5 bis 7 zeigen schematische Draufsichten auf Umlenkeinheiten 80, die bei Ausführungsformen der erfindungsgemäßen optischen Anordnung 10 für ein LiDAR-System 1 verwendet werden können.

Bei den Ausführungsformen der Figuren 5 bis 7 weist die Umlenkeinheit 80 jeweils einen Lochspiegel 81 mit Spiegelkörper 82 und Langloch 83 auf. Jedes Langloch 83 besitzt eine Längserstreckung 84 in einer Längserstreckungsrichtung 84` und eine Quererstreckung 85 in einer Quererstreckungsrichtung 85`. Die Quererstreckung 85 ist geringer als die Längserstreckung 84, so dass das Loch 83 im Spiegelkörper 82 als Langloch, als Spalt oder Schlitz erscheint. Eine jeweilige Längserstreckungsrichtung 84` senkrecht ausgebildet zur Linienorientierung 65-2 der zu Grunde liegenden Linienlichtquelle 65-1. In den Fällen der Figuren 5 bis 7 sind die Quererstreckungsrichtungen 85` senkrecht ausgebildet zur Längserstreckungsrichtung 84' und parallel zur Linienorientierung 65-2.

Das Langloch 83 der Ausführungsform der Umlenkeinheit 80 gemäß Figur 5 besitzt die Form eines Rechtecks. Die lange Kante des Rechtecks ist dabei parallel zur Längserstreckungsrichtung 84` ausgerichtet. Die kurze Kante des Rechtecks ist parallel zur Quererstreckungsrichtung 85` ausgerichtet.

Das Langloch 83 der Ausführungsform der Umlenkeinheit 80 gemäß Figur 6 besitzt die Form einer Ellipse mit der Orientierung der großen Halbachse parallel zur Längserstreckungsrichtung 84`. Die kleine Halbachse der Ellipse ist parallel zur Quererstreckungsrichtung 85` ausgerichtet.

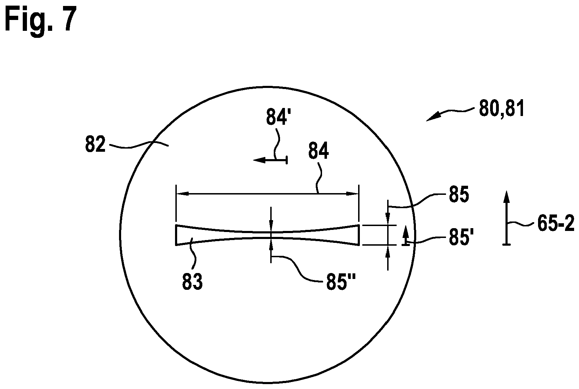

Das Langloch 83 der Ausführungsform der Umlenkeinheit 80 gemäß Figur 7 weist in Draufsicht eine doppelt konkave Form oder die Form eines Doppelmeniskus auf. Das bedeutet, dass die Querstreckung 85 an den Enden des Langlochs 83 größer ist als die Quererstreckungsrichtung 85" in einem zentralen Bereich des Langlochs 83.

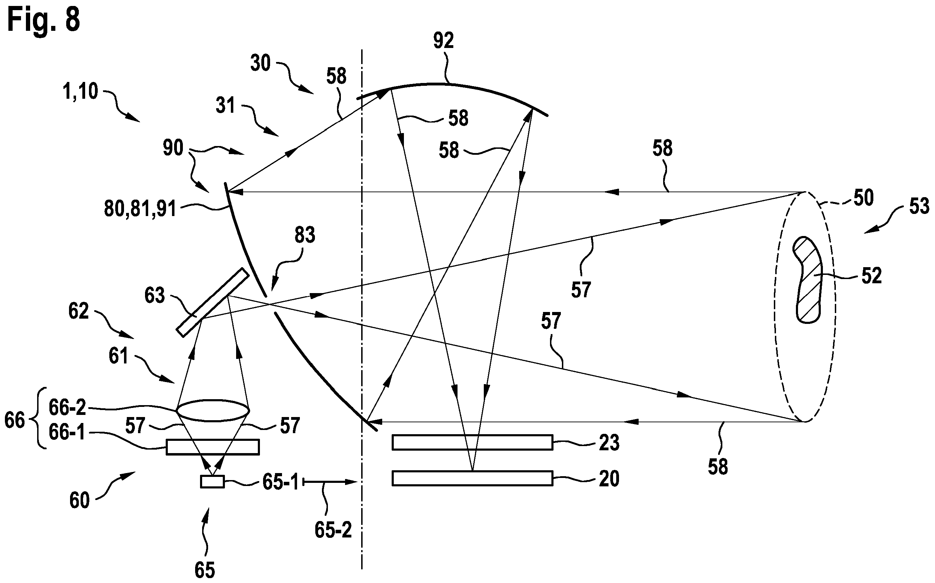

Figuren 8 bis 10 zeigen schematische und teilweise geschnittene Seitenansichten zu erfindungsgemäß ausgestalteten LiDAR-Systemen 1 mit gefalteter Empfängeroptik 30.

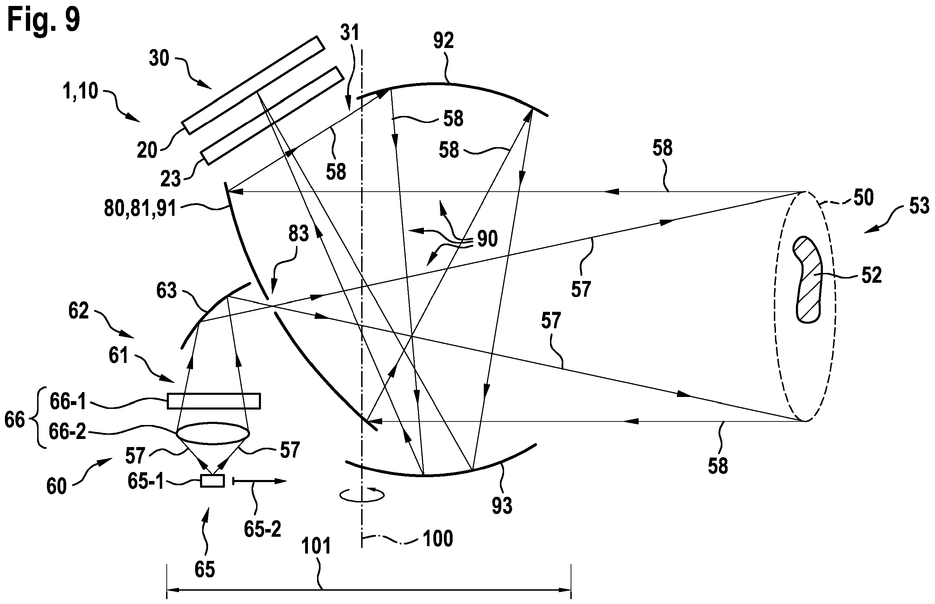

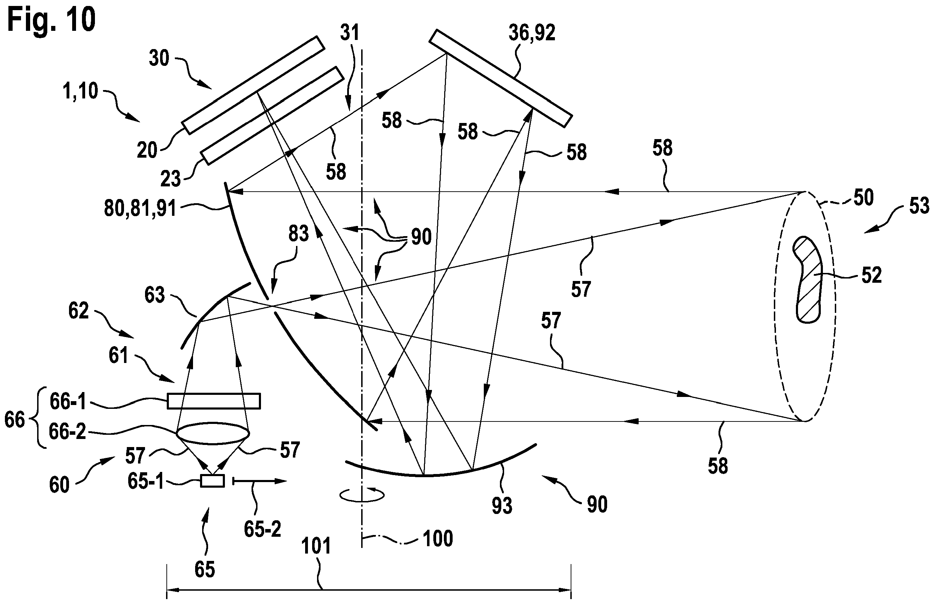

Die jeweiligen Strahlengänge 31 der Empfängeroptik 30 liegen bei den Ausführungsformen gemäß den Figuren 8 bis 10 in gefalteter Form vor, nämlich durch das Verwenden mindestens zweier Fangspiegel 91, 92 bei der Ausführungsform gemäß Figur 8 und vorzugsweise von drei Fangspiegeln 91, 92, 93 bei den Ausführungsformen gemäß Figuren 9 und 10.

Ein jeweiliger in Bezug auf die Lichteintrittsseite und Lichtaustrittsseite erster Fangspiegel 91 bildet gleichzeitig die Umlenkeinheit 80 im Sinne der vorliegenden Erfindung und ist als Lochspiegel 81 mit Langloch 83 ausgestaltet. Dabei ist das Langloch 83 für den Durchtritt und die Strahlformung des Primärlichts 57 zur Aussendung in das Sichtfeld 50 zur Beleuchtung der Szene 53 und des dort enthaltenen Objekts 52 ausgebildet.

Das Primärlicht 57 wird jeweils von einer Linienlichtquelle 65-1 mit Linienorientierung 5 und 60-2 als Teil einer Lichtquelleneinheit 65 generiert und über eine Strahlformungsoptik 66 mit einer ersten Kollimatoroptik 66-1 und einer zweiten Kollimatoroptik 66-2 sowie über einen Spiegel 63 einer Ablenkoptik 62 in Richtung auf das Langloch 63 des Lochspiegels 81 Umlenkeinheit 80 als erstem Fangspiegel 91 gerichtet.

Die gesamte optische Anordnung 10 des erfindungsgemäßen LiDAR-Systems 1 ist mittels eines entsprechenden Mechanismus um eine Drehachse 100 drehbar und weist dabei einen bei der Drehung wirksamen Durchmesser 101 auf.

Die Empfängeroptik 30 mit Strahlengang 31 bei der optischen Anordnung 10 gemäß Figur 8 weist neben dem ersten Fangspiegel 91 einen zweiten Fangspiegel 92 auf, der das Sekundärlicht 58 vom ersten Fangspiegel 91 empfängt und dieses für den Durchgang durch ein Filter 23 auf die Detektoranordnung 20 richtet. Die ersten und zweiten Fangspiegel 91 und 92 sind bei dieser Ausführungsform als konkave Hohlspiegel ausgebildet.

Die Empfängeroptik 30 mit Strahlengang 31 bei der optischen Anordnung 10 gemäß Figur 9 weist neben dem ersten Fangspiegeln 91 zweite und dritte Fangspiegel 92 bzw. 93 in Form konkaver Hohlspiegel auf. Der zweite Fangspiegel 92 empfängt das Sekundärlicht 58 vom ersten Fangspiegel 91 und gibt dieses an den dritten Fangspiegel 93 weiter, der seinerseits für eine Abbildung des Sekundärlichts 58 mit Durchgang durch das Filter 23 auf die Detektoranordnung 20 sorgt.

Die Empfängeroptik 30 mit Strahlengang 31 bei der optischen Anordnung 10 gemäß Figur 10 weist eine zur Anordnung aus Figur 9 analoge Struktur auf, wobei jedoch der zweite konkave Fangspiegel 92 ersetzt ist durch ein planares Bandpassfilter 36.

Vorzugsweise liegt bei den Ausführungsformen des erfindungsgemäßen LiDAR-Systems gemäß den Figuren 8 bis 10 der Fokus des Spiegels oder Mikrospiegels 63 und mithin der Fokus des Strahls des Primärlichts 57 in der Ebene des jeweiligen Lochs 83 des Lochspiegels 81 als Fangspiegel 91 der Umlenkeinheit 80, welche als Strahlteilereinheit fungiert. Dies ist schematisch in den Figuren 8 bis 10 dargestellt.

Diese und weitere Merkmale und Eigenschaften der vorliegenden Erfindung werden an Hand der folgenden Darlegungen weiter erläutert:
Die Ortsauflösung kann bei einem LiDAR-System 1 durch die gleichzeitige oder sequentielle Beleuchtung eines größeren Bereiches, z.B. einer Linie, und einer empfangsseitigen Unterscheidung anhand einer abbildenden Optik und eines Detektorarrays oder einer Detektorzeile realisiert werden.

Besonders platzsparend und mit geringen Kosten können dabei ausgangs- und eingangsseitige miteinander koaxiale Ausführungen aufgebaut werden, bei welchen der ausgangseitige Sendepfad 61 und der eingangsseitige Empfangspfad 31 teilweise zusammenfallen.

Koaxiale Konfigurationen, wie sie auch erfindungsgemäß vorgestellt werden, basieren zum einen auf dem Vorsehen eines Strahlteilers 80 und zum anderen auf dessen Ausgestaltung mit einem Lochspiegel 81, wie dies im Zusammenhang mit den Figuren 2 bis 7 schematisch dargestellt ist.

Bei Lochspiegeln 81 wird eine Öffnung 83 in einem Spiegelkörper 82 verwendet um den Sendestrahl als Primärlicht 57 hindurchzuführen und über die verbleibende Spiegelfläche des Spiegelkörpers 82 ein aus der Umgebung zurückgeworfenes Signal im Sinne von Sekundärlicht 58 zu empfangen. Auch dies ist in den Figuren 2 bis 7 schematisch dargestellt.

Dazu wird zum Beispiel ein kollimierter Laserstrahl als Primärlicht 57 emittiert. In der Regel ist es günstig, einen großen Strahldurchmesser auszusenden, da dies aus Augensicherheitsgründen vorteilhaft ist und darüber hinaus bei einer gegebenen Strahlqualität geringere Strahldivergenzen ermöglicht. Des Weiteren ist es wünschenswert, möglichst viel Fläche für die Detektion des am Target oder Objekt 52 reflektierten Lichtes 58 zur Verfügung zu haben, um bei großen Messdistanzen eine ausreichend hohe Signalintensität zu erhalten.

Diese Kombination dieser beiden Anforderungen stellt bei herkömmlichen Anordnungen für LiDAR-Systeme einen Widerspruch dar, da die Aussendung eines größeren Strahls die Empfangsapertur verringert.

Erfindungsgemäß wird nunmehr ein Vorgehen beschrieben, wie bei einem koaxialen LiDAR-System 1 über eine Öffnung 83 in einem Spiegel 81 als Strahlteiler 80 ein Linienbeleuchtungsstrahl (flash line oder line flash) ausgesendet werden kann, ohne dabei die Empfangsapertur maßgeblich zu reduzieren und gleichzeitig einen großen Strahldurchmesser an der Austrittsfläche des Systems zu gewährleisten.

Wesentliche Merkmale der Erfindung sind dementsprechend:
- das Ausbilden eines koaxialen LiDAR-Systems 1,
- das Abbilden einer Linie, indem nämlich ein Strahl als Primärlicht 57 in einer ersten Richtung senkrecht zur Ausbreitungsrichtung kollimiert und in einer zweiten Richtung senkrecht zur Ausbreitungsrichtung und insbesondere auch senkrecht zur ersten Richtung divergent geformt wird,
- das Führen des Laserstrahls als Primärlicht 57 durch eine Öffnung 83 in einem Empfangsspiegel als Strahlteiler 80 in Form eines Lochspiegels 81 geführt,
- das Fokussieren der divergenten Achse auf den Spalt oder in der Nähe des Spaltes als Spiegelloch 83 des Lochspiegels 81, insbesondere auf die oder auf eine oder in eine oder in die schmale Seite der Öffnung 83 im Spiegelkörper 82,
- das Kollimieren der nicht divergenten Achse, entsprechend der langen Seite der Öffnung 83 des Spiegelkörpers 82,
- das Ausbilden der langen Seite der Öffnung 83 des Spiegelkörpers 82 um mindestens einen Faktor 2 im Vergleich zur schmalen Seite der Öffnung 83 des Spiegelkörpers 82 und/oder
- das Erreichen einer Drehung der Linie im Fernfeld im Vergleich zur Orientierung des Spaltes, der durch das Spiegelloch 83 im Spiegelkörper 82 der Umlenkeinheit 80 gebildet wird.

Als Vorteile stellen sich unter anderem ein:
- Es kann ein koaxiales Lasersystem mit geringen Abmessungen verwendet werden, wobei ein Großteil der Geräteapertur für die Detektion von Signalen eingesetzt werden kann.
- Der ausgesendete Strahl als Primärlicht 57 besitzt am Ort des Strahlaustrittes bereits einen großen Strahldurchmesser, was für die Augensicherheit wichtig ist.
- Der kollimierte Strahl besitzt dabei ebenfalls einen großen Strahldurchmesser, wodurch das Aussenden eines Strahls mit geringer Divergenz möglich wird.

Der prinzipielle Aufbau ist in Figur 2 dargestellt.

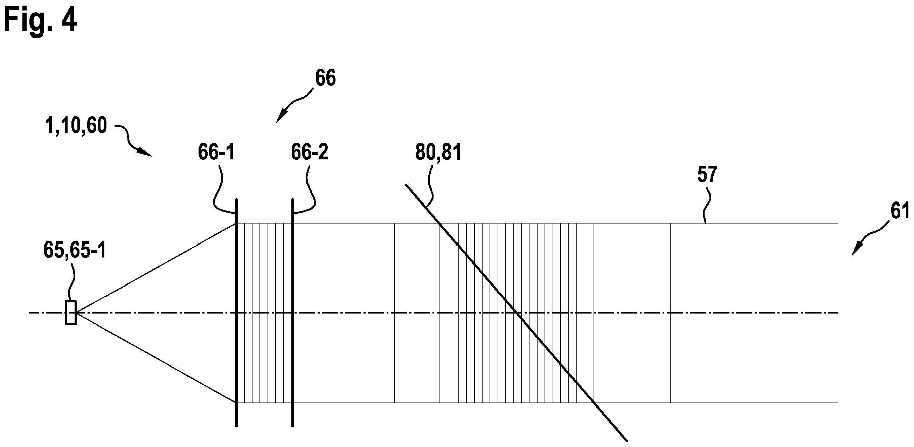

Der vom Laser als Lichtquelle 65-1 der Lichtquelleneinheit 65 ausgesendete Strahl als Primärlicht 57 wird mit Hilfe geeigneter Optiken, insbesondere einer Strahlformungsoptik 66, z.B. mit zwei Zylinderlinsen 66-1, 66-2 oder mit einer symmetrischen Linse, geformt. Dabei wird der Laser 65-1 in der Achse, welche später die schmale Seite der Linie darstellt, so geformt, dass sich eine geringe Divergenz ergibt, wie dies im Zusammenhang mit Figur 4 dargestellt ist.

Besonders vorteilhaft ist dabei eine Kollimation des Strahls des Primärlichts 57. Die Divergenz des Strahls des Primärlichts 57 hängt dabei vom Strahldurchmesser, also dem minimalen Strahldurchmesser, welcher auch als Strahltaillie oder Beam-Waist bezeichnet wird, und der Strahlqualität des Strahles 57 ab.

Je größer der Strahldurchmesser ist, desto geringer ist die Divergenz.

In der Regel werden sehr geringe Divergenzen angestrebt, wodurch ein großer Strahldurchmesser in dieser Raumrichtung von Vorteil ist. In der anderen Raumrichtung soll der Strahl eine relativ große Divergenz aufweisen, damit sich nach einem gewissen Abstand vom LiDAR-System eine linienförmige Lichtverteilung oder eine Beleuchtung nach Art einer Linie ergibt.

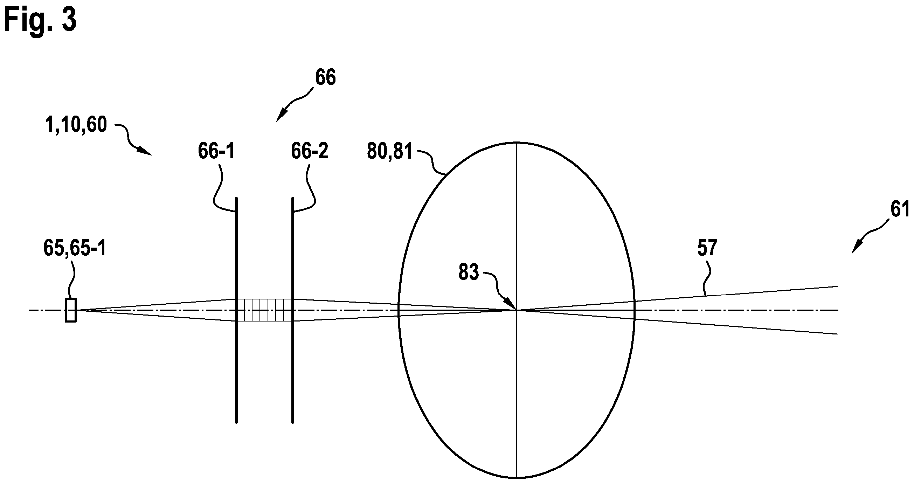

Erfindungsgemäß wird diese Divergenz über einen Zwischenfokus erzeugt, welcher in der Nähe der Öffnung 83 des Spiegels 81 liegt, wie dies im Zusammenhang mit Figur 3 dargestellt ist.

Der Spiegel 81 besitzt wie bereits erwähnt eine Öffnung 83 im Spiegelkörper 82, welche mindestens um einen Faktor 2 breiter oder länger - in dieser Achse ist der Strahl 57 kollimiert - ist als hoch, hier befindet sich der Fokus der divergenten Achse.

Der ausgesendete Strahl passiert dabei als Primärlicht 57 die Öffnung 83 des Spiegelkörpers 82 des Lochspiegels 81 als Strahlteiler 80, ohne durch den Spiegel beeinflusst zu werden. Lediglich der empfangene Strahl wird als Sekundärlicht 58 über die Spiegelfläche des Spiegelkörpers 82 auf eine abbildende Optik (Objektiv) und die Detektoranordnung 20 abgelenkt.

Bei einer bevorzugten Variante des erfindungsgemäßen LiDAR-Systems 1 befindet sich zwischen Umlenkspiegel als Strahlteiler 80 und der Austrittsfläche aus dem System 1 keine weitere Optik, welche den Strahl signifikant ändert.

### Konkretes Rechenbeispiel:

Der Durchmesser einer kreisförmigen Empfangsapertur betrage 25 mm. Damit ergäbe sich eine Gesamtfläche von 491 mm². Der Spalt zum Aussenden müsste bei einer Linienbeleuchtung lediglich 15 mm x 1 mm also 15 mm² betragen. Damit wird lediglich ein Bruchteil der zur Verfügung stehenden Geräteapertur, nämlich ca. 3%, nicht als Empfangsfläche verwendet und ca. 97 % stehen dafür zur Verfügung.

An der Austrittsfläche des LiDAR-Systems 1 ergibt sich eine Strahlaustrittsfläche, welche in erster Näherung für die Augensicherheit maßgeblich ist und sich aus dem Durchmesser der kollimierten Achse und dem Durchmesser der divergenten Achse zusammensetzt. Der Durchmesser der kollimierten Achse ist etwas kleiner als der Öffnungsdurchmesser der Öffnung 83. Der Strahldurchmesser der divergenten Achse wird geringfügig durch die Abmessungen der Öffnung 83 und im Wesentlichen durch die Strahldivergenz und den Abstand der Spiegelöffnung zum Strahlaustritt aus dem System 1 bestimmt.

Bei einer Strahldivergenz von 15° und einem Abstand von Spiegelöffnung 83 zu Strahlaustritt von 50 mm ergibt sich beispielsweise bereits ein Strahldurchmesser von mindestens 13 mm.

Dieser Wert würde bei einer Augensicherheitsbewertung bereits große Vorteile bringen, da hier von einer Standardpupille - in diesen Bereich kann gleichzeitig Strahlung einfallen - von 7 mm ausgegangen wird.

Um ein Umgebungsbild zu erzeugen, wird schließlich das komplette System oder eine strahlablenkende Optik gedreht.

Folgende alternative Ausführungsformen sind denkbar und können auch beliebig miteinander kombiniert werden:
- Die Öffnung 83, also das Spiegelloch, des Körpers 82 des Lochspiegels 81 als Umlenkelement 80 kann jede Form, zum Beispiel die Form eines Rechtecks, einer Ellipse oder eine Freiform, annehmen wie dies im Zusammenhang mit den Figuren 5 bis 7 schematisch dargestellt ist. Besonders vorteilhaft ist dabei eine Form, welche nach außen hin höher wird, um den größeren Abstand zum Fokuspunkt an den Randbereichen auszugleichen.
- Ein Spiegel als Umlenkeinheit 80 kann mehrere Öffnungen 83 an unterschiedlichen Stellen besitzen.
- Vor dem Strahlaustritt aus dem LiDAR-System kann der Strahl des Primärlichts 57 mehrfach umgelenkt und/oder gefaltet werden. Dies ist im Zusammenhang mit den Figuren 8 bis 10 dargestellt.
- Die Öffnung könnte sich in einer Optik befinden.
- Es können auch mehrere einzelne Laseremitter als Lichtquellen 65-1 der Lichtquelleneinheit 65 verwendet werden, zum Beispiel in Form von Laserbarren (laser bar).
- In diesem Fall überlappen an der Stelle der Öffnung 83 die Strahlen der Einzellaser 5 und 60-1, was ebenfalls einer Fokussierung entspricht.
- Ein vorgesehener Spiegel kann eine Krümmung aufweisen, welche empfangsseitig zur Strahlformung verwendet werden kann.

Bei einer alternativen Sichtweise der vorliegenden Erfindung besteht die der Erfindung zu Grunde liegende Aufgabe darin, einen platzsparenden Aufbau für einen rotierenden, koaxialen LiDAR-Sensor anzugeben, der zur Erhöhung der augensicheren Sendeleistung eine möglichst große Strahlaufweitung des Sendestrahls 57 erlaubt.

Ein Unterschied im Vergleich zu den vorangehend beschriebenen Anordnungen ist die Fokussierung auf den Empfangspfad.

Wesentliche Merkmale der Erfindung gemäß dieser alternativen Sichtweise sind im Folgenden aufgelistet und können in beliebiger Kombination miteinander auftreten:
- Das Vorsehen eines koaxialen LiDAR-Systems 1,
- die Abbildung einer Linie, d.h. eines Sendestrahls 57, der in einer Richtung kollimiert und in einer Richtung divergent ist,
- das Führen eines Laserstrahls als Sendestrahl 57 durch eine Öffnung 83 in einem Empfangsspiegel 81 als Umlenkeinheit 80,
- das Fokussieren der divergenten Achse auf oder in der Nähe des Spaltes, nämlich der schmalen Seite der Öffnung 83 im Spiegelkörper 82 des Lochspiegels 81 als Umlenkeinheit 80,
- das Kollimieren der nicht divergenten Achse, auf die lange Seite der Öffnung 83 des Spiegelkörpers 82 des Lochspiegels 81,
- das Ausbilden der langen Seite oder der Längserstreckung 84 ist um mindestens einen Faktor 2 größer als die schmale Seite oder Querstreckung 85,
- die abgedrehte Orientierung der Linie der Linienlichtquelle 65-1 im Fernfeld relativ zur Orientierung 84` des Spaltes oder der Öffnung 83 des Spiegelkörpers 82 des Lochspiegels 81,
- eine Krümmung des Spiegels 81, der die Empfangsapertur darstellt und die Öffnung 83 enthält, und/oder
- eine Faltung des Empfangsstrahlengang 31 zur weiteren Platzersparnis durch den Einsatz mehrerer gekrümmter Spiegel übereinander.

Folgende Vorteile der Erfindung stellen sich ein:
- Der Spiegel 81, der die Empfangsapertur darstellt und die Öffnung 83 enthält, ist gekrümmt. Dadurch wird eine Linse eingespart.
- Es stellt sich eine Platzersparnis auf Grund von mehrfacher Strahlfaltung des Empfangsstrahlengangs 31 sowie durch Überlagerung von Sendestrahl 57 und Empfangsstrahl 58 im gleichen Bauvolumen ein.
- Es ergibt sich ein verringertes Gewicht durch den Einsatz von Spiegeloptiken. Dies verbessert den Fußgängerschutz und senkt die Anforderungen an den Motor des Scanners des LiDAR-Systems 1.
- Es ist eine kostengünstige Fertigung möglich, da die Freiformspiegel als Spritzgussbauteile gefertigt werden können und teilweise mehrere Spiegel zu einem Bauteil zusammengefasst werden können.
- Ferner ist eine Reduktion der Anzahl der Justageschritte durch Zusammenfassen mehrerer Spiegel in einem Bauteil möglich.
- Eine Einsparung von Linsenhalterungen durch Zusammenfassen von Spiegeln mit dem Rotorgehäuse ist möglich.
- Es ergibt sich eine maximale Strahlaufweitung durch Verschiebung des Schlitzes aus dem Rotationsmittelpunkt, insbesondere im Vergleich zur vorangehend beschriebenen Ausführungsform im Zusammenhang mit den Figuren 2 bis 7.

Der prinzipielle Aufbau der Erfindung gemäß dieser alternativen Sichtweise ist in Figur 8 dargestellt. Die Sendeoptik 60 sowie der Laser als Lichtquelle 65-1 sind, bis auf den Umlenkspiegel als Umlenkeinheit 80 im Sendepfad 61, identisch zu den oben beschriebenen Ausführungsformen aus den Figuren 2 bis 7.

Der erste Spiegel des Empfangspfads 31 ist dadurch gekennzeichnet, dass er mindestens eine schlitzförmige Öffnung enthält und gekrümmt ist. Der Empfangspfad 31 wird nun innerhalb eines kompakten Volumens durch den Einsatz mehrerer gekrümmter Spiegel gefaltet und schließlich auf die Detektoranordnung 20 fokussiert oder abgebildet. Ein optisches Bandpassfilter befindet sich entweder direkt vor der Detektoranordnung 20 - mit dem Vorteil einer kleineren Filterfläche - oder vor dem ersten Empfangsspiegel, nämlich mit dem Vorteil eines kleinen Einfallswinkels im Fall von kleinen Blendenzahlen der Empfangsoptik 30.

Figur 8 ist eine schematische Darstellung einer Ausführungsform der Erfindung, wobei der Sendestrahlengang 61 durchgezogen und der Empfangsstrahlengang 31 strichpunktiert dargestellt ist. Für den Empfangsstrahl 58 ist zur besseren Übersicht nur der horizontale Strahl dargestellt.
Begriffe Sendeoptik: Slow Axis Collimator (SAC), Fast Axis Collimator (FAC)

Eine weitere Ausführungsform, bei der drei gekrümmte Spiegel im Empfangspfad 31 zum Einsatz kommen, ist in Figur 9 gezeigt.

Ein Vorteil dieser Ausführungsform ist die erhöhte Anzahl von Designfreiheitsgraden zur Kompensation von Aberrationen im Empfangsstrahlengang 31.

Figur 9 ist also eine schematische Darstellung einer zweiten Ausführungsform der Erfindung, wobei der Sendestrahlengang 61 durchgezogen und der Empfangsstrahlengang 31 strichpunktiert dargestellt ist.

Der wesentliche Unterschied zur Anordnung gemäß Figur 8 ist, dass der Empfangsstrahl 58 über drei gekrümmte Empfangsspiegel gefaltet ist, was die Anzahl der Freiheitsgrade zur Kompensation von Aberrationen erhöht wird, ohne den Bauraum zu vergrößern.

Alternativ kann auch einer der Spiegel durch ein reflexives Bandpassfilter ersetzt sein oder werden, wie dies schematisch in Figur 10 gezeigt ist.

Figur 10 ist eine schematische Darstellung einer weiteren Ausführungsform der Erfindung, wobei der Sendestrahlengang 61 durchgezogen und der Empfangsstrahlengang strichpunktiert dargestellt ist. Ein Unterschied zur Darstellung in Figur 9 ist, dass einer der Empfangsspiegel 92 durch ein reflektives Bandpassfilter 36 ersetzt ist.

## Patentansprüche

1. Optische Anordnung (10) für ein LiDAR-System (1),
mit:
- einer Empfängeroptik (30) und einer Senderoptik (60), welche mit teilweise koaxialen Strahlengängen (31, 61) ausgebildet sind,
- einer Lichtquelle und
- einer Umlenkeinheit (80) in einem Übergangsbereich von einem gemeinsamen koaxialen Bereich zu einem getrennten biaxialen Bereich der Strahlengänge (31, 61) der Empfängeroptik (30) und der Senderoptik (60) zur biaxialen Abzweigung eines detektorseitigen Bereichs des Strahlengangs (31) der Empfängeroptik (30),
**dadurch gekennzeichnet, dass**
- die Umlenkeinheit (80) einen Lochspiegel (81) mit einem Langloch (83) mit einer größeren Erstreckung (84) in einer Längserstreckungsrichtung (84') und mit einer geringeren Erstreckung (85) in einer Ouererstreckungsrichtung (85') aufweist,
- die Lichtquelle (65-1) als Linienlichtquelle mit einer Linienorientierung (65-2) in einem Sichtfeld (50) des LiDAR-Systems (1) ausgebildet ist und
- die Längserstreckungsrichtung (84') des Langlochs (83) senkrecht zur Linienorientierung (65-2) der Linienlichtquelle (65-1) ausgerichtet ist.

2. Optische Anordnung (10) nach Anspruch 1, bei welcher das Verhältnis aus Längserstreckung (84, 88) zu Ouerstreckung (85, 89) an der Umlenkeinheit (80) mindestens 2:1, vorzugsweise mindestens 3:1 und weiter bevorzugt mindestens 4:1 beträgt.

3. Optische Anordnung (10) nach Anspruch 1 oder 2, bei welcher ein Durchmesser einer Apertur des Strahlengangs (61) der Senderoptik (60) oder die Längserstreckung (84, 88) an der Umlenkeinheit (80) im Verhältnis zu einer Apertur des Strahlengangs (31) der Empfängeroptik (30) einen Wert aufweist im Bereich von etwa 1:14 bis etwa 1:7.

4. Optische Anordnung (10) nach einem der vorangehenden Ansprüche, bei welcher das Langloch (83) der Umlenkeinheit (80) in Draufsicht auf die Umlenkeinheit (80) die Form eines Rechtecks, eine bikonvex elliptische Form, eine bikonkave Form oder eine Doppelmeniskusform aufweist.

5. Optische Anordnung (10) nach einem der vorangehenden Ansprüche, bei welcher
- die Senderoptik (60) und die Empfängeroptik (30) mit zumindest teilweise oder abschnittsweise zueinander koaxialen Strahlengängen (31, 61) auf der Strahlaustrittsseite der Senderoptik (60) und/oder Strahleintrittsseite der Empfängeroptik (30) ausgebildet sind und
- die Umlenkeinheit (80) zumindest teilweise oder abschnittsweise biaxiale Strahlengänge (31, 61) auf der Seite der Lichtquelleneinheit (65) der Senderoptik (60) und auf der Seite einer Detektoranordnung (20) der Empfängeroptik (30) bildet.

6. Optische Anordnung (10) nach einem der vorangehenden Ansprüche, bei welcher
- die Empfängeroptik (30) einen mehrfach gefalteten Strahlengang (31) aufweist, insbesondere mit zwei oder drei Fangspiegeln (91, 92, 93), und
- insbesondere ein eingangsseitig erster Fangspiegel (91) Teil der Umlenkeinheit (80) ist oder die Umlenkeinheit (80) bildet, ein oder mehrere der Fangspiegel (91, 92, 93) als konkave Spiegel ausgebildet sind und/oder einer der Fangspiegel (92) als reflektierendes Bandpassfilter (36) ausgebildet ist, insbesondere in planarer Form.

7. LiDAR-System (1) zur optischen Erfassung eines Sichtfeldes (50), insbesondere für eine Arbeitsvorrichtung und/oder ein Fahrzeug, mit einer optischen Anordnung (10) nach einem der Ansprüche 1 bis 6.

8. Arbeitsvorrichtung und insbesondere ein Fahrzeug, mit einem LiDAR-System (1) nach Anspruch 7 zur optischen Erfassung eines Sichtfeldes (50).

## Claims

1. Optical arrangement (10) for a LIDAR system (1), comprising:
- a receiver optical unit (30) and a transmitter optical unit (60), which are configured with partially coaxial beam paths (31, 61),
- a light source and
- a deflection unit (80) in a transition region from a common coaxial region to a separate biaxial region of the beam paths (31, 61) of the receiver optical unit (30) and of the transmitter optical unit (60) for biaxially branching off a detector-side region of the beam path (31) of the receiver optical unit (30),
**characterized in that**
- the deflection unit (80) has a hole mirror (81) having an elongated hole (83) having a larger extent (84) in a longitudinal extent direction (84') and having a smaller extent (85) in a transverse extent direction (85'),
- the light source (65-1) is configured as a line light source having a line orientation (65-2) in a field of view (50) of the LIDAR system (1), and
- the longitudinal extent direction (84') of the elongated hole (83) is oriented perpendicularly to the line orientation (65-2) of the line light source (65-1).

2. Optical arrangement (10) according to Claim 1, wherein the ratio of longitudinal extent (84, 88) to transverse extent (85, 89) at the deflection unit (80) is at least 2:1, preferably at least 3:1 and more preferably at least 4:1.

3. Optical arrangement (10) according to Claim 1 or 2, wherein the ratio of a diameter of an aperture of the beam path (61) of the transmitter optical unit (60) or the longitudinal extent (84, 88) at the deflection unit (80) to an aperture of the beam path (31) of the receiver optical unit (30) has a value in the range of approximately 1:14 to approximately 1:7.

4. Optical arrangement (10) according to any of the preceding claims, wherein the elongated hole (83) of the deflection unit (80), in a plan view of the deflection unit (80), has the shape of a rectangle, a biconvex elliptical shape, a biconcave shape or a double meniscus shape.

5. Optical arrangement (10) according to any of the preceding claims, wherein
- the transmitter optical unit (60) and the receiver optical unit (30) are configured with beam paths (31, 61) that are at least partially or sectionally coaxial to one another on the beam exit side of the transmitter optical unit (60) and/or beam entrance side of the receiver optical unit (30), and
- the deflection unit (80) forms at least partially or sectionally biaxial beam paths (31, 61) on the side of the light source unit (65) of the transmitter optical unit (60) and on the side of a detector arrangement (20) of the receiver optical unit (30).

6. Optical arrangement (10) according to any of the preceding claims, wherein
- the receiver optical unit (30) has a multiply folded beam path (31), in particular having two or three secondary mirrors (91, 92, 93), and
- in particular a first secondary mirror (91) on the input side is part of the deflection unit (80) or forms the deflection unit (80), one or more of the secondary mirrors (91, 92, 93) are configured as concave mirrors and/or one of the secondary mirrors (92) is configured as a reflective bandpass filter (36), in particular in planar form.

7. The LIDAR system (1) for optically detecting a field of view (50), in particular for a working apparatus and/or a vehicle, comprising an optical arrangement (10) according to any of Claims 1 to 6.

8. Working apparatus and in particular a vehicle, comprising a LIDAR system (1) according to Claim 7 for optically detecting a field of view (50).

## Revendications

1. Arrangement optique (10) pour un système LIDAR (1), comprenant :
- une optique de réception (30) et une optique d'émission (60), lesquelles sont configurées avec des trajets de rayons (31, 61) partiellement coaxiaux,
- une source de lumière et
- une unité de déflexion (80) dans une zone de transition d'une zone coaxiale commune vers une zone biaxiale séparée des trajets de rayons (31, 61) de l'optique de réception (30) et de l'optique d'émission (60) servant à la dérivation biaxiale d'une zone côté détecteur du trajet de rayon (31) de l'optique de réception (30),
**caractérisé en ce que**
- l'unité de déflexion (80) possède un miroir perforé (81) pourvu d'un trou oblong (83) avec une extension (84) plus grande dans une direction d'extension longitudinale (84') et avec une extension (85) plus petite dans une direction d'extension transversale (85'),
- la source de lumière (65-1) est réalisée sous la forme de source de lumière linéaire avec une orientation de ligne (65-2) dans un champ de vision (50) du système LIDAR (1) et
- la direction d'extension longitudinale (84') du trou oblong (83) est orientée perpendiculairement à l'orientation de ligne (65-2) de la source de lumière linéaire (65-1).

2. Arrangement optique (10) selon la revendication 1, avec lequel le rapport entre l'extension longitudinale (84, 88) et l'extension transversale (85, 89) au niveau de l'unité de déflexion (80) est au minimum égal à 2:1, de préférence au minimum égal à 3:1 et encore de préférence au minimum égal à 4:1.

3. Arrangement optique (10) selon la revendication 1 ou 2, avec lequel un diamètre d'une ouverture du trajet de rayon (61) de l'optique d'émission (60) ou l'extension longitudinale (84, 88) au niveau de l'unité de déflexion (80) par rapport à une ouverture du trajet de rayon (31) de l'optique de réception (30) présente une valeur dans la plage d'environ 1:14 à environ 1:7.

4. Arrangement optique (10) selon l'une des revendications précédentes, avec lequel le trou oblong (83) de l'unité de déflexion (80), en vue de dessus sur l'unité de déflexion (80), présente la forme d'un rectangle, une forme elliptique biconvexe, une forme biconcave ou une forme de double ménisque.

5. Arrangement optique (10) selon l'une des revendications précédentes, avec lequel
- l'optique d'émission (60) et l'optique de réception (30) sont configurées avec des trajets de rayons (31, 61) coaxiaux entre eux, au moins partiellement ou par segments, sur le côté de sortie du rayon de l'optique d'émission (60) et/ou le côté d'entrée du rayon de l'optique de réception (30) et
- l'unité de déflexion (80) forme des rayons (31, 61) au moins partiellement ou par segments biaxiaux sur le côté de l'unité de source de lumière (65) de l'optique d'émission (60) et sur le côté d'un arrangement détecteur (20) de l'optique de réception (30).

6. Arrangement optique (10) selon l'une des revendications précédentes, avec lequel
- l'optique de réception (30) possède un trajet de rayon (31) plié plusieurs fois, notamment avec deux ou trois miroirs secondaires (91, 92, 93) et
- en particulier un premier miroir secondaire (91) côté entrée est une partie de l'unité de déflexion (80) ou forme l'unité de déflexion (80), un ou plusieurs des miroirs secondaires (91, 92, 93) sont réalisés sous la forme de miroirs concaves et/ou l'un des miroirs secondaires (92) est réalisé sous la forme de filtre passe-bande réfléchissant (36), notamment de forme plane.

7. Système LIDAR (1) destiné à l'acquisition optique d'un champ de vision (50), notamment pour un dispositif de travail et/ou un véhicule, comprenant un arrangement optique (10) selon l'une des revendications 1 à 6.

8. Dispositif de travail et notamment véhicule, comprenant un système LIDAR (1) selon la revendication 7 destiné à l'acquisition optique d'un champ de vision (50) .
